# EUROPEAN PATENT APPLICATION

(11) **EP 0 933 828 A2**
(43) Date of publication of application: **04.08.1999**
(21) Application number: 99108134.0
(22) Date of filing: 01.02.1994
(51) Int. Cl.: H01M 10/40, H01M 4/62, H01M 4/02

(54) **Electrochemical cells using a polymer electrolyte**

(30) Priority: 05.02.1993 US 12689
(62) Divisional of application: 94300753.4
(71) Applicant: EVEREADY BATTERY COMPANY, INC., St. Louis Missouri 63164 (US)
(72) Inventor: Bailey, John C., Columbia Station, Ohio 44028 (US)
(74) Representative: Fairbairn, Angus Chisholm

(57) **Abstract**

An electrochemical cell is provided having a cathode comprising active cathode material bound in and dispersed throughout a polymer film including an ionisable electrolyte salt, wherein the amount of active cathode material is at least 60% by volume of the cathode. The cell may be prepared by dispersing active cathode material in an ionically nonconductive prepolymeric composition free from ionisable electrolyte salt, applying the composition to a current collector, polymerising to form a cathode assembly, combining the cathode assembly with an anode to form an electrode assembly and placing the electrode assembly in a cell housing, wherein only subsequent to forming the electrode assembly an ionisable electrolyte salt is added to render the cathode ionically conductive to form the cell.

## Description

The present invention relates to an article suitable for use as a cathode in an electrochemical cell comprising a polymer electrolyte, as well as to a process for making such cells.

Polymer electrolytes are typically either solid or semi-solid and their use in electrochemical cells may eliminate the need for a microporous separator in the cell, as well as rendering the resultant cell free of liquid electrolyte. Conventional cells in which the electrolyte is an organic liquid normally contain a microporous separator; however, these separators are an expensive component of the cell. Furthermore, such separators can increase the internal resistance of the cell and, consequently, may decrease the high rate performance of the cell. The liquid organic electrolytes used in such conventional cells are often highly volatile liquids and, if these liquids escape from the cell, a hazardous situation can occur.

Polymer electrolytes are known and typically comprise a polymer matrix material and an ionically conductive salt. Examples of polymer matrix materials which are generally used in such electrolytes include the polyalkylene oxides, such as polyethylene oxide or polypropylene oxide; and substituted polyethylene glycols. Ionically conductive salts which form the second part of the electrolyte include, for example, LiCF₃SO₃, and LiCl0₄.

The prior art describes several examples of solid polymeric electrolyte cells. U.S. Patent Number 4,925,751 discloses a solid state laminar cell containing an alkali metal anode, a solid ionically conducting electrolyte, a composite cathode and a carrier. The composite cathode comprises active material, a conductive filler and an ionically conductive electrolyte. The electrolyte comprises a liquid monomeric or prepolymeric curable composition and an ionisable alkali metal salt. During assembly of this cell the composite cathode mixture is applied to a current collector and then a layer of polymer electrolyte is coated over this mixture. The polymer electrolyte layer and the polymer in the cathode are then cured in place, after which a thin foil anode layer is applied to the polymeric surface. U.S. Patent Number 4,748,542 and U.S. Patent Number 4,638,407 both disclose solid state capacitors and multicell batteries in which a layer of a solid polymer electrolyte is laminated to a layer of the cathode and anode.

Another example of a solid electrolyte cell is disclosed in U.S. Patent Number 4,594,299. The cell disclosed in this patent is made by protecting an electrode, such as a lithium electrode, with an ionically conductive polymer. The resulting electrode can then be combined with a cathode to form the electrochemical cell.

A further solid polymeric electrolyte is described in U.S. Patent Number 4,654,279. The electrolyte in this patent is a two phase interpenetrating network consisting of a mechanically supporting phase of a continuous network of a crosslinked polymer and an ionically conducting phase. A suitable amount of a metal salt is then added to the electrolyte to provide ionic conductivity.

U.S. Patent Number 4,589,197 discloses a composite cathode sheet made from a solution of an active cathode material and a low molecular weight polymer, such as polyethylene oxide, in a solvent such as acetonitrile. The polymer preferably contains an electrolyte salt.

Despite the advantages of polymer electrolyte cells, as discussed above, there are certain problems associated with the use of such electrolytes, and particularly with solid polymer electrolytes. Three common problems which are often encountered are: (1) the cells typically contain only a low volume of active cathode material; (2) the electrolyte has little mechanical stability; and (3) there are safety problems associated with the assembly of live high area cells without the ability to check for shorts.

The cells described in each of U.S. Patents Number 4,925,751, 4,748,542 and 4,638,407 discussed above will exhibit each of these three problems. In the devices of each of these patents, the cathode mixture comprises a prepolymer and an ionisable salt. This mixture will not, therefore, have a sufficiently high volume of active cathode material, and certainly not as high a volume as a conventional cell. The active life of the cell will thus be reduced. An ionisable salt also forms part of the polymer electrolyte layer; therefore, when this is applied as a film to the cathode mixture, it will be in the form of a tacky viscous gel which will be difficult to work with and will be susceptible to puncture by any of the other cell components, such as the metallic current collector. Furthermore, the resulting cathode and electrolyte layer combination is ionically conductive and thus, when this combined component is assembled with the anode, the device becomes an active electrochemical cell during the assembly process. There are clear disadvantages associated with this.

In U.S. Patent 4,589,197, which discloses a solution of active cathode material and low molecular weight polymer in a solvent, as discussed above, the choice of polymers is, in practice, limited to low molecular weight polymers, since the polymer must be dissolved in a solvent and cast to form a sheet.

It is apparent, therefore, that there are problems associated with currently available electrochemical cells containing polymer electrolytes.

The present invention overcomes the above problems and provides an article suitable for use as a cathode in an electrochemical cell employing a polymer electrolyte, which cells have a high volume of active cathode material and allow easy and safe assembly of the cell.

In accordance with the above, the present invention provides in its first aspect an article suitable for use as a cathode in an electrochemical cell, the article comprising active cathode material, and sufficient of an ionically nonconductive prepolymeric composition to bind the cathode material.

In a particular embodiment of this aspect, the present invention provides an article suitable for use as a cathode in an electrochemical cell, the article comprising an major amount of active cathode material and a binding amount of an ionically nonconductive prepolymeric composition.

In a preferred embodiment of this aspect of the invention, there is provided a cathode for use in an electrochemical cell, the cathode comprising a major amount by volume of active cathode material dispersed in an ionically nonconductive polymer film, the film being in contact with an electrically conductive current collector.

The present invention also provides, in a further aspect, an electrochemical cell comprising an anode, consisting of an alkali metal or an alkaline earth metal, a cathode, including active cathode material, preferably a major amount of active cathode material, dispersed in an ionically nonconductive polymer film, the film being in contact with an electrically conductive current collector, and an ionisable electrolyte salt.

In yet another aspect, the present invention provides a process for the preparation of the electrochemical cell of the present invention, as described in more detail hereinafter.

The article of the present invention includes active cathode material. The precise nature of the active cathode material is not critical to the present invention so long as this can be bound with or by an ionically nonconductive prepolymeric composition. The choice of material depends on various factors, such as the type of anode material to be employed in the cell and the intended use of the cell. Examples of suitable active cathode materials include: the transition metal chalcogenides, particularly the transition metal oxides and sulphides, such as cupric sulphide (CuS), cupric oxide (CuO), iron sulphides, vanadium pentoxide (V₂0₅), V₆0₁₃, cobalt oxides, titanium disulphide (TiS₂), tungsten trioxide (W0₃), molybdenum trioxide (Mo0₃), molybdenum disulphide (MoS₂); transition-metal polysulphides; and lithiated metal oxides and sulphides, such as LiₓFeS₂, LiₓTiS₂, lithiated cobalt and/or nickel oxides or lithiated manganese oxides. Electrically conductive polymers, such as polypyrrole or polyaniline, may also be used. Preferred active cathode materials include iron sulphide (FeS₂), manganese dioxide (MnO₂), titanium disulphide (TiS₂), vanadium pentoxide (V₂0₅), V₆0₁₃, and tungsten trioxide (W0₃). When using a lithium anode and a 1.5 volt cell, we generally prefer to use an iron sulphide (FeS₂) cathode material.

The article of the present invention includes sufficient of an ionically nonconductive prepolymeric composition to bind the cathode material. By "prepolymeric", as used herein, is meant that the composition may be polymerised.

Prepolymeric compositions suitable for use in the present invention are preferably both electrically insulating and ionically nonconductive. The composition may include any one or combination of a suitable polymerisable monomer, comonomer or oligomer. The composition may also be curable and crosslinkable. Suitable compositions include ethylenically unsaturated monomers, comonomers and oligomers, alkylene oxide monomers, comonomers and oligomers, acrylic acid-based monomers, comonomers and oligomers, and mixtures of such compounds. Specific examples of materials suitable for use in the prepolymeric composition include: polyalkylene oxides, such as polypropylene oxide, polyethylene oxide or polyethylene-polypropylene oxide; polyalkylene glycols, such as polyethylene glycol; mixtures of polyalkylene oxides and glycols; polyethylene glycol acrylates, diacrylates and triacrylates, modified siloxanes; urethanes with polyethylene glycol side chains; epoxides and acrylated epoxides. Mixtures of low molecular weight polyethylene oxide and one or more polyethylene glycol acrylates, e.g. diacrylates and triacrylates, are preferred.

When the cathode material of the present invention is dispersed in an ionically nonconductive polymer film, any of the conductive polymer electrolytes discussed above can be used as the film. In addition, any of the polymer electrolytes known in the art, for example as disclosed in U.S. Patents Number 4,638,407; 4,925,751; 5,011,501; and 5,041,346, may be used as the cathode polymer film, provided that the resultant polymer film is ionically nonconductive. If necessary, this may be achieved by omitting the ionisable electrolyte salt during preparation of the cathode polymer film.

The composition is ionically nonconductive when mixed, polymerised, cured and crosslinked in the presence of the active cathode material. However, the composition may be rendered ionically conductive by the absorption of an ionisable electrolyte salt. This absorption may be carried out in any suitable fashion, and preferably, by absorption from a solution of the salt in an organic solvent.

The composition may be polymerised, cured or crosslinked by the use of any conventional technique, such as radiation or heat. If desired, a polymerisation initiator may be present. The choice of initiator may depend, for example, on the types of monomers or prepolymers used in the composition. Examples of suitable polymerisation initiators are disclosed in Encyclopaedia of Polymer Science and Engineering, Vol. 2, "Anionic Polymerisation and Cationic Polymerisation", pp. 143 to 145. A preferred example is 2,2'-azobisisobutyronitrile.

The article of the present invention suitable for use as a cathode may include components in addition to those discussed above. Examples of such additional components include electronic conductors and voltage regulators, such as reducible metal additives. Preferred electronic conductors include graphite, acetylene black, carbon fibres, compatible metal powders or fibres, or electrically conductive polymers, such as polypyrrole or polyaniline.

In the article of the present invention, there is preferably a major amount of active cathode material, that is the active cathode material makes up the major portion of the cathode mixture by volume. Typically, when measured in the absence of the ionisable electrolyte salt, the amount of the active cathode material in the finished cathode is at least about 50%, preferably at least about 60%, and more preferably at least about 70% by volume. The amount of the prepolymeric composition used is an amount sufficient to bind the active cathode material and preferably to form a polymer film having the active cathode material dispersed throughout. This amount can vary, but typically ranges from about 10% to about 45% by volume, and preferably, from about 20% to about 35% by volume.

The present invention also provides a method for making a cathode suitable for use in an electrochemical cell comprising a polymer electrolyte, which method comprises contacting active cathode material with sufficient of an ionically nonconductive prepolymeric composition to effect binding of the cathode material.

The above process will be explained in more detail below, with relation to the preparation of an electrochemical cell.

The present invention also provides a method for making an electrochemical cell containing a polymer electrolyte, which generally comprises combining an article suitable for use as a cathode in an electrochemical cell, the article comprising a major amount of active cathode material and sufficient of an ionically nonconductive prepolymeric material to bind the cathode material, with the remaining components of an electrochemical cell.

In more detail, the above process of the present invention comprises:
(i) preparing a cathode by contacting a major amount by volume of active cathode material with a binding amount of an ionically nonconductive prepolymeric composition;
(ii) applying the resulting composition to an electrically conductive current collector;
(iii) polymerising the prepolymeric composition to form a film in which the active cathode material is dispersed;
(iv) placing an active anode material next to the cathode;
(v) disposing an electrically insulating material between the cathode and anode to form an electrode assembly;
(vi) placing the electrode assembly inside a housing for the cell; and
(vii) adding an amount of an ionisable electrolyte salt solution sufficient to provide ionic conductivity to the polymer film in the cathode and between the
cathode and the anode.

In an alternative embodiment, the present invention provides a process for making an electrochemical cell that contains a polymer electrolyte comprising:
a) preparing a cathode by contacting a major amount of active cathode material with a binding amount of an ionically nonconductive prepolymeric composition;
b) applying the cathode and prepolymeric composition mixture to an electrically conductive carrier and polymerising the prepolymeric composition to provide a polymer film having active cathode material dispersed throughout;
c) placing an active anode material next to the cathode with an electrically insulating ion permeable material disposed between the cathode and the anode to form an electrode assembly; and
d) placing the electrode assembly inside a housing for the cell, and adding an amount of an ionisable electrolyte salt solution sufficient to provide ionic conductivity to the polymer film in the cathode and between the cathode and anode to form an active electrochemical cell.

The article of the present invention suitable for use as a cathode, is made by contacting the active cathode material with a binding or film-forming amount of the prepolymeric composition. If desired, an organic solvent or plasticiser may be employed to improve the viscosity of the mixture. Typically the solvent employed will also act as plasticiser and, in such cases, a solvent with a high boiling point is desired. Examples of suitable solvents include: alkylene carbonates, such as propylene carbonate or ethylene carbonate; 3-methyl-2-oxazolidone; dimethoxy tetraglycol (tetraglyme) and sulpholane or mixtures thereof. The precise amount of the plasticising solvent used is not essential to the present invention, provided that sufficient of the solvent is used to plasticise the mixture. Solvents which do not also act as plasticisers may also be used and, in this case, we prefer to use a low boiling point solvent, such as trichloroethylene, dimethoxyethane, triethylene glycol dimethyl ether (triglyme), dioxolane or tetrahydrofuran. The amount of such solvent used is not critical to the present invention, so long as this is sufficient to improve the viscosity of the mixture and so long as this can be removed easily after application of the cathode mixture to the current collector. We generally find that only a small amount of solvent is required. Mixtures of solvents may also be used and, in certain circumstances mixtures are preferred, providing a balance and diversity of properties to the mixture.

Alternatively, an amount of the ionisable electrolyte salt may be used to alter the viscosity of or to plasticize the cathode mixture, so long as the amount used is less than that needed to render the cathode ionically conductive. This method of altering the viscosity or plasticising the mixture is less preferred.

Once the cathode mixture has been prepared, it is applied to an electrically conductive current collector. The choice of current collector is not essential to the present invention, so long as it is electrically conductive. Typical such collectors include: a metal foil; for example a foil of aluminium, nickel or copper; a metal screen; a metallic or carbon foam, for example a nickel foam; or a metallic or carbon mat, for example a nickel or carbon fiber mat. An example of a preferred carrier is a metallic foil, such as aluminium foil.

The cathode mixture may be applied to the current collector by any one of several different methods. Examples of appropriate methods of application include roll coating, doctor blading and imbed-extrusion.

Once the cathode mixture has been applied to the current collector, any solvent used to affect the viscosity may be removed, for example by standard techniques, and the prepolymer composition may be polymerised, cured and/or crosslinked, for example using the techniques discussed above. The resultant article is a solid, dry, flexible, ionically nonconductive polymer film with active cathode material dispersed throughout, adhered to an electrically conductive current collector. The thickness of the polymer film may vary and is not critical to the present invention. Typically the thickness ranges from about 0.0508 to about 0254 mm (about 2 to about 10 mils), and preferably from about 0.0762 to about 0.154 mm (about 3 to about 6 mils).

Polymerisation, curing or crosslinking of the prepolymer composition in the cathode may result in the formation of a continuous polymer film over the surface of the cathode. In this case, no active cathode material is exposed on the surface and the polymer film may then be used as the separator between the cathode and the anode. However, in order to ensure proper separation between the cathode and the anode, it may be desirable to employ another electrically insulating ion permeable separator between the cathode and the anode. This separator may be a microporous membrane or sheet, paper, plastic screen or a polymer film.

In the electrochemical cells of the present invention, when it is desired to include a separator, we prefer to use a polymer film, and preferably a film which includes the same or similar components to those that form the prepolymer composition in the cathode. Thus, when using a lithium foil anode, for example, we prefer to use a film of polyethylene oxide. It is preferred that the polymer film used for the separator does not contain any ionisable salt, thus preventing the cell from being electrochemically active until after assembly is completed. The separator may be applied to either the cathode or the anode, so long as it is disposed between them in the completed electrode assembly. When a polymer film is employed as separator, this is preferably applied to one or both surfaces of the anode. The polymer film forming the separator may be sprayed, laminated or roll coated, to form a tough thin amorphous flexible film on the electrode.

The active anode material used in the electrochemical cells of the present invention may include active metals, such as zinc or aluminium; alkali metals; alkaline earth metals; and alkali metal interchelated carbon or graphites, such as lithium interchelated carbon or graphite, or composites thereof. Preferred active anode materials include alkali metals, especially lithium. Preferably, the anode is a foil of the metal, although the anode may also be a composite of a foil of the metal laminated with a layer of a polymeric composition.

The anode and separator, when used, are placed next to the cathode to form the completed electrode assembly. If present, the separator is disposed between the cathode and the anode, as discussed above. Any type of electrode assembly may be used in the electrochemical cells of the present invention. Suitable electrode assemblies include: a jelly roll; flat single multicell assemblies and stacked flat multicell assemblies. When using a jelly roll assembly, the cathode, separator (when used) and anode are wound and then placed in the cell housing. Prior to placing the assembly in the housing a continuity check can be made on the assembly to detect any shorts.

The cell housing may be of any material conventionally used for this component, for example plastic or metal, such as stainless steel or nickel plated steel, metal coated plastic, plastic-metal laminate sheets, and impermeable inorganic-coated plastic, such as SiO or SiOₓ-coated plastic.

The assembly of the cell may be completed by the addition of an amount of an ionisable electrolyte salt to render the polymer film in the cathode and the separator between the cathode and the anode (when used) ionically conductive. Examples of suitable salts for non-aqueous cell systems include alkali metal salts that have the same cation as the anode metal, such as LiCF₃SO₃, LiClO₄, LiBF₄, LiAsF₆, Li(CF₃SO₂)₂N, and the like. For aqueous cells systems, ZnCl, AlCl, KOH, and the like are suitable salts.

The amount of the salt employed will vary depending on, for example, the type of active cathode material, the type of active anode material, the type of polymer employed in the cell, and the intended use of the call. Typically, the amount will range from about 0.1 M to about 10.0 M, preferably from about 0.5 M to about 3.0 M, and more preferably from about 1.0 M to about 1.5 M. The salt is suitably added to the cell as a solution of the salt in a solvent. This solvent may, if desired, be that solvent acting as a plasticiser for the cathode mixture. For non-aqueous cells, suitable solvents include non-aqueous organic solvents such as dioxolane, dimethoxyethane, 3-methyl-2-oxazolidone, propylene carbonate, ethylene carbonate, triethylene glycol dimethyl ether (triglyme), diemethoxy tetraglycol (tetraglyme), sulpholane and 3,5-dimethylisoxazole. For aqueous cell systems, water may be used as the solvent.

The cell is suitably sealed by using a cover with a sealing gasket. The cover, if metallic, may be in contact with one of the electrodes to provide a terminal for the cell and may contain a pressure relief vent. For flat cell construction, the housing may be sealed with metal or plastic sheets, or plastic-metal laminate sheets.

The electrochemical cells of this invention may be aqueous or non-aqueous, primary or rechargeable and have a solid polymer electrolyte. The electrolyte is formed after the prepolymer composition in the cathode is polymerised, and the electrode assembly is made and placed in the cell, at which point the ionisable salt is added. Since the ionisable salt is not added until after the electrode assembly is completed, if any short is present, no current will flow, and any potentially hazardous situations are avoided.

Another advantage of the device of the present invention is that since the salt is not added until after assembly of the cell is completed, the cathode can contain a large volume of active cathode material.

Yet another advantage of the device of the present invention is that after the prepolymeric composition is polymerised, the cathode is in the form of a solid dry flexible film that can be easily assembled with the anode.

Still yet another advantage of the device of the present invention is that when the salt is added as a solution in a solvent which serves as a plasticizer for the polymer the polymer composition in the cathode mixture will swell to provide good electrode and electrolyte interfacial contact.

### EXAMPLE

A test cell is made using two planar electrodes, one of lithium foil and the other of a mixture of 64.7% by volume of FeS₂, 5-3% by volume of acetylene black, and 30% by volume of a prepolymer composition. The prepolymer composition is 48.8% by weight of polyethylene glycol acrylate, 48.8% by weight of polyethylene oxide (molecular weight 200), 2.4% by weight of polyethylene glycol diacrylate and 0.2% by weight of polymerisation initiator, 2,2'-azobisisobutyronitrile. Both glycol acrylates contain 9 PEO units. An amount of trichloroethylene is added to the cathode mixture to lower the mix viscosity so that it can be roll coated onto a 0.0254mm (1 mil) thick aluminum foil carrier. After coating onto the carrier, the prepolymer in the cathode mixture is chemically polymerised and crosslinked *in situ* by heating to 500°C. The total thickness of the cathode is 0.127 mm (5 mils). A layer of polyethylene oxide film is disposed between the lithium foil anode and the cathode mixture. The cell assembly is placed in a cell container, and an electrolyte solution of 1.5 M LiCF₃SO₃ electrolyte salt in a solvent mixture of 50% by volume 1,3-dioxolane, 40% by volume dimethoxyethane, 10% by volume 3-methyl-2-oxazolidone and 0.2% by volume 3,5-dimethylisoxazole, is added to complete the cell. Noticeable swelling of the cathode mixture is observed.

## Claims

1. An electrochemical cell having a cathode comprising active cathode material bound in and dispersed throughout a polymer film including an ionisable electrolyte salt, wherein the amount of active cathode material is at least 60% by volume of the cathode.

2. A cell according to claim 1, the cell being obtainable by dispersing the active cathode material in an ionically nonconductive prepolymeric composition free from ionisable electrolyte salt, applying the composition to a current collector, polymerising to form a cathode assembly, combining the cathode assembly with an anode to form an electrode assembly and placing the electrode assembly in a cell housing, wherein only subsequent to forming the electrode assembly an ionisable electrolyte salt is added to render the cathode ionically conductive to form the cell.

3. A cell according to claim 1 or claim 2, wherein the amount of active cathode material is at least 70% by volume of the cathode.

4. A cell according to any preceding claim, wherein the active cathode material is a transition metal chalcogenide.

5. A cell according to claim 4, wherein the active cathode material is FeS₂, MnO₂, TiS_{2,} V₂O_{5,} V₆O₁₃ or WO₃.

6. A cell according to any preceding claim, wherein the polymer is prepared from a prepolymeric composition selected from ethylenically unsaturated monomers, comonomers and oligomers; alkylene oxide monomers, comonomers and oligomers; acrylic acid-based monomers, comonomers and oligomers; or mixtures of such monomers, comonomers and oligomers.

7. A cell according to claim 6, wherein the polymer is prepared from a prepolymeric composition selected from polypropylene oxide, polyethylene oxide, polyethylene-polypropylene oxide, polyethylene glycol, polyethylene glycol acrylates, diacrylates and triacrylates, modified siloxanes, urethanes with polyethylene glycol side chains, epoxides and acrylated epoxides, and mixtures of such compounds.

8. A cell according to any preceding claim, wherein the current collector comprises a metallic foil.

9. A cell according to any preceding claim, wherein the active cathode material is FeS₂, the polymer is prepared from a mixture comprising polyethylene glycol acrylate, polyethylene oxide and polyethylene glycol diacrylate, and the current collector is aluminium foil.

10. A cell according to any preceding claim, wherein the anode is lithium foil.

11. A cell according to any preceding claim, wherein the ionisable electrolyte salt is an alkali metal salt.

12. A cell according to claim 11, wherein the ionisable electrolyte salt is added to the cell as a solution in a suitable solvent.

13. A cell according to claim 12, wherein the alkali metal salt is LiCF₃SO₃, and the solvent is selected from dioxolane, propylene carbonate, and dimethoxyethane.

14. A cell according to any preceding claim, further including a separator between the cathode and the anode.

15. A cell according to claim 14, wherein the separator is a polymer film.

16. A cell according to claim 15, wherein the components of the polymer film forming the separator are the same as or similar to those in the polymer film forming part of the cathode.

17. A cell according to claim 15 or claim 16, wherein the separator is a polyethylene oxide polymer film attached to one or both surfaces of the anode.

18. A process for the preparation of an electrochemical cell, which comprises combining an electrode assembly free from ionisable electrolyte salt as defined in any one of claims 2 to 17 with an ionisable electrolyte salt and the remaining cell components.

19. An electrode assembly as defined in any of claims 2 to 17.
